# EUROPEAN PATENT APPLICATION

(11) **EP 2 071 578 A1**
(43) Date of publication of application: **17.06.2009**
(21) Application number: 07254862.1
(22) Date of filing: 13.12.2007
(51) Int. Cl.: G11B 27/11, G11B 27/034, G06Q 30/00, A63F 13/00, G06F 17/30

(54) **Video interaction apparatus and method**

(71) Applicant: Sony Computer Entertainment Europe Ltd., 10 Great Marlborough Street London W1F 7LP (GB)
(72) Inventor: Canniff, Sebastian John, London, W1F 7LP (GB)
(74) Representative: Turner, James Arthur

(57) **Abstract**

A media player for playing pre-recorded removable media comprises a media decoder to decode video data for display, a metadata decoder to decode metadata associated with a respective image frame of said video data, in which the metadata identifies one or more visible elements of that image frame, input means operable to detect a user selection corresponding to one or more elements of the image frame, a network connection operable to connect to a remote server and access information about the or each element so selected, and a user interface generation means operable to generate for display some or all of the information about the or each element so selected.

## Description

The present invention relates to a video interaction apparatus and corresponding method of video interaction.

In the field of interactive content, several mechanisms are known that allow a user to interact with a still or moving image.

In interactive digital TV (as typified by a service such as Sky - see www.sky.com), a message is superposed on the programme image by the broadcaster, inviting the user to press a button on their remote control. Typically, pressing the button will either access further relevant content or to set a reminder to record the next instance of an advertised programme. In the first case, pressing the button serves to switch the user to another channel on which the relevant information is being transmitted, and is analogous to an internet hyperlink. In the second case, pressing the button causes transmitted scheduling data to be used by the digital TV to set a recording schedule and thus activates a schedule-data driven function of the device.

In DVD and other optical video media, again a message or image can be superposed on the main playback image that functions as an on-screen button. Pressing 'OK' on the DVD remote control then causes another track on the DVD to be played that typically provides content related to the scene in which the message or image was superposed. A typical example is the 'follow the white rabbit' feature in the *The Matrix* DVD, in which a white rabbit icon can be set to appear whenever a featurette related to a scene is available on the DVD.

More recently, the MPEG 7 multimedia content description standard allows a content description to be multiplexed with video content, allowing the content to be searched according to the description.

On the internet, static interactive images can be provided by a CompuServe Graphics Interchange Format (GIF) map. Circular or rectangular regions of a GIF image can be associated with hyperlinks to other web pages. Similar functionality is provided by Macromedia Flash animations.

However, the above mechanisms are comparatively limited in the extent to which they provide interactivity to the user. Embodiments of the present invention aim to provide additional modes of interactivity.

In a first aspect of the present invention, A media player for playing pre-recorded removable media comprises a media decoder to decode video data for display, a metadata decoder to decode metadata associated with a respective image frame of said video data, in which the metadata identifies one or more visible elements of that image frame, input means operable to detect a user selection corresponding to one or more elements of the image frame, a network connection operable to connect to a remote server and access information about the or each element so selected, and a user interface generation means operable to generate for display some or all of the information about the or each element so selected.

In another aspect of the present invention, a method of video interaction comprises decoding video from a pre-recorded removable medium for display, decoding metadata associated with an image frame of said video data in which the metadata identifies one or more visible elements of that image frame, detecting a user selection corresponding to one or more elements of the image frame, accessing information about the or each element so selected from a remote server through a network connection, and displaying some or all of the accessed information about the or each element so selected.

In another aspect of the present invention, a method of providing interactive video comprises generating metadata for an image frame of video data, in which the metadata identifies of one or more selectable visible elements of the image frame that correspond to purchasable items, encoding the metadata and video data onto a removable data medium, and providing a server operable to communicate via a network with a player of the removable data medium, in which the server parses data received from the player to identify the or each purchasable item indicated by the player, and initiates a sale of the or each purchasable item once required user information has been obtained.

In another aspect of the present invention, a removable data medium comprises video data and metadata associated with an image frame of the video data, in which the metadata image frame identifies one or more selectable visible elements of that image frame, and the metadata provides information to identify to a remote server one or more purchasable items corresponding to the or each respective element.

Variant aspects of the above provide corresponding apparatus, methods and removable media for video games.

Advantageously, the embodiments of the above aspects enable a user to click on certain elements of a video such as an actor or the actors clothes at whatever point in the video they wish, and receive information about that actor, or information about the clothing, and a mechanism to purchase the clothing online.

Embodiments of the present invention will now be described by way of example with reference to the accompanying drawings, in which:
Figure 1 is a schematic diagram of an entertainment device;
Figure 2 is a schematic diagram of a cell processor;
Figure 3 is a schematic diagram of a video graphics processor;
Figure 4 is a schematic diagram of an interactive playback device in accordance with an embodiment of the present invention;
Figure 5 is a flow diagram of a method of video interaction in accordance with an embodiment of the present invention; and
Figure 6 is a flow diagram of a method of providing interactive video transaction in accordance with an embodiment of the present invention.

An apparatus and method of video interaction are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an exemplary embodiment of the present invention, a user inserts a Blu-Ray^{®} disc into a PlayStation^{®} 3 (PS3^{®}) and watches a movie. At some point in the movie, the user sees a wristwatch they like that is being worn by one of the movie characters. Using a navigation controller, the user moves a pointer over the watch and clicks on it. Metadata associated with the image frame displaying the watch is used to identify the object that has been clicked upon, and to provide the user with associated information about the watch that is stored on the disc, such as the make and model number. An internet connection is also used by the PS3 to access up-to-date information about the watch, such as a related Wikipedia entry, and its availability and price, and to allow the user to purchase the watch online if so desired.

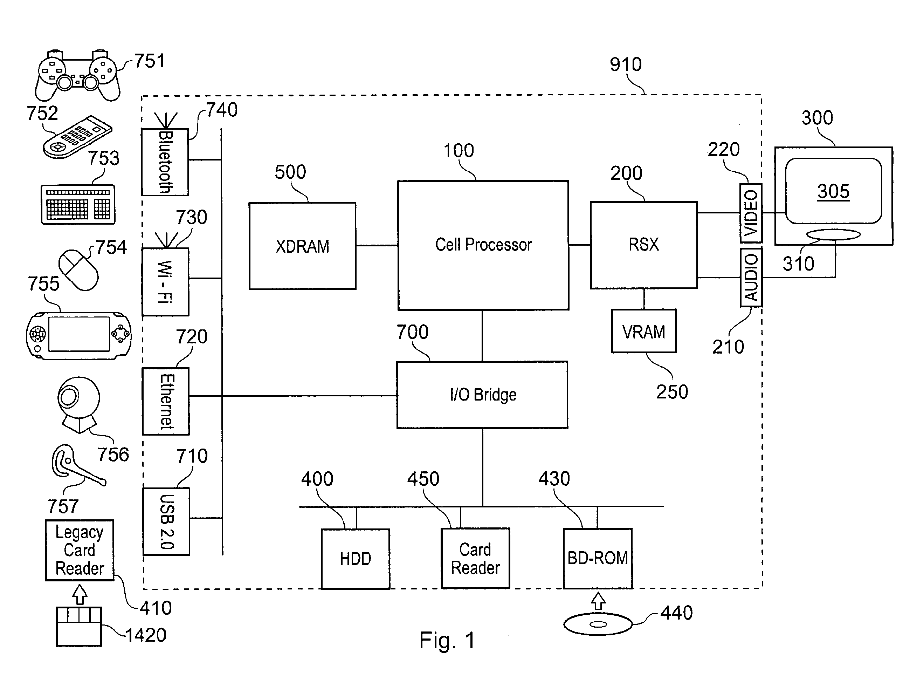

Figure 1 schematically illustrates the overall system architecture of the Sony® Playstation 3® entertainment device. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analogue joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device may be used as a controller. In the case of the Playstation Portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

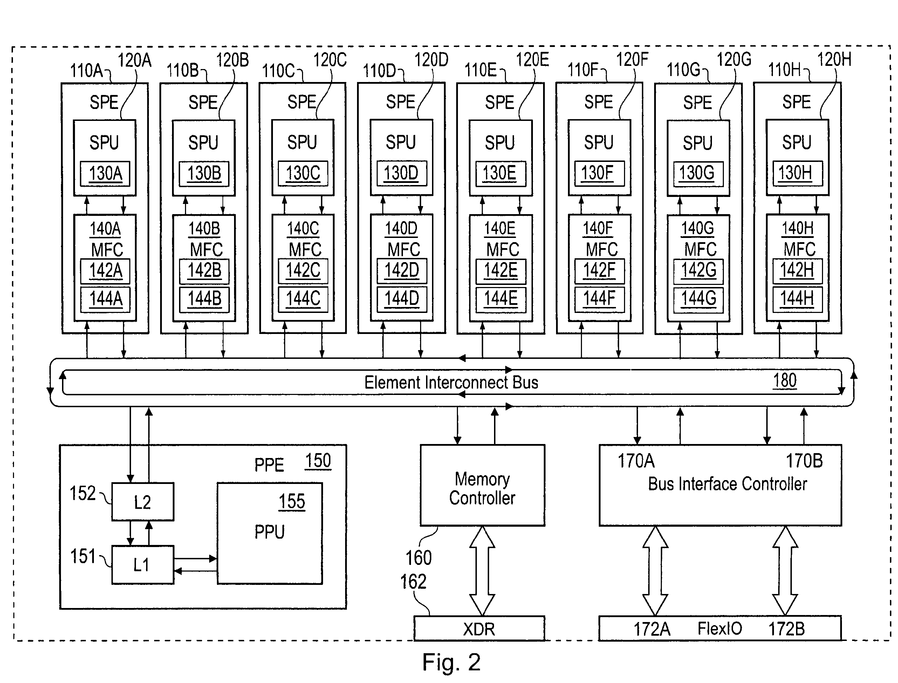

Referring now to Figure 2, the Cell processor 100 has an architecture comprising four basic components: external input and output structures comprising a memory controller 160 and a dual bus interface controller 170A,B; a main processor referred to as the Power Processing Element 150; eight co-processors referred to as Synergistic Processing Elements (SPEs) 110A-H; and a circular data bus connecting the above components referred to as the Element Interconnect Bus 180. The total floating point performance of the Cell processor is 218 GFLOPS, compared with the 6.2 GFLOPs of the Playstation 2 device's Emotion Engine.

The Power Processing Element (PPE) 150 is based upon a two-way simultaneous multithreading Power 970 compliant PowerPC core (PPU) 155 running with an internal clock of 3.2 GHz. It comprises a 512 kB level 2 (L2) cache and a 32 kB level 1 (L1) cache. The PPE 150 is capable of eight single position operations per clock cycle, translating to 25.6 GFLOPs at 3.2 GHz. The primary role of the PPE 150 is to act as a controller for the Synergistic Processing Elements 110A-H, which handle most of the computational workload. In operation the PPE 150 maintains a job queue, scheduling jobs for the Synergistic Processing Elements 110A-H and monitoring their progress. Consequently each Synergistic Processing Element 110A-H runs a kernel whose role is to fetch a job, execute it and synchronise with the PPE 150.

Each Synergistic Processing Element (SPE) 110A-H comprises a respective Synergistic Processing Unit (SPU) 120A-H, and a respective Memory Flow Controller (MFC) 140A-H comprising in turn a respective Dynamic Memory Access Controller (DMAC) 142A-H, a respective Memory Management Unit (MMU) 144AH and a bus interface (not shown). Each SPU 120A-H is a RISC processor clocked at 3.2 GHz and comprising 256 kB local RAM 130A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 120A-H does not directly access the system memory XDRAM 500; the 64-bit addresses formed by the SPU 120A-H are passed to the MFC 140A-H which instructs its DMA controller 142A-H to access memory via the Element Interconnect Bus 180 and the memory controller 160.

The Element Interconnect Bus (EIB) 180 is a logically circular communication bus internal to the Cell processor 100 which connects the above processor elements, namely the PPE 150, the memory controller 160, the dual bus interface 170A,B and the 8 SPEs 110A-H, totalling 12 participants. Participants can simultaneously read and write to the bus at a rate of 8 bytes per clock cycle. As noted previously, each SPE 110A-H comprises a DMAC 142A-H for scheduling longer read or write sequences. The EIB comprises four channels, two each in clockwise and anticlockwise directions. Consequently for twelve participants, the longest step-wise dataflow between any two participants is six steps in the appropriate direction. The theoretical peak instantaneous EIB bandwidth for 12 slots is therefore 96B per clock, in the event of full utilisation through arbitration between participants. This equates to a theoretical peak bandwidth of 307.2 GB/s (gigabytes per second) at a clock rate of 3.2GHz.

The memory controller 160 comprises an XDRAM interface 162, developed by Rambus Incorporated. The memory controller interfaces with the Rambus XDRAM 500 with a theoretical peak bandwidth of 25.6 GB/s.

The dual bus interface 170A,B comprises a Rambus FlexIO® system interface 172A,B. The interface is organised into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 700 via controller 170A and the Reality Simulator graphics unit 200 via controller 170B.

Data sent by the Cell processor 100 to the Reality Simulator graphics unit 200 will typically comprise display lists, being a sequence of commands to draw vertices, apply textures to polygons, specify lighting conditions, and so on.

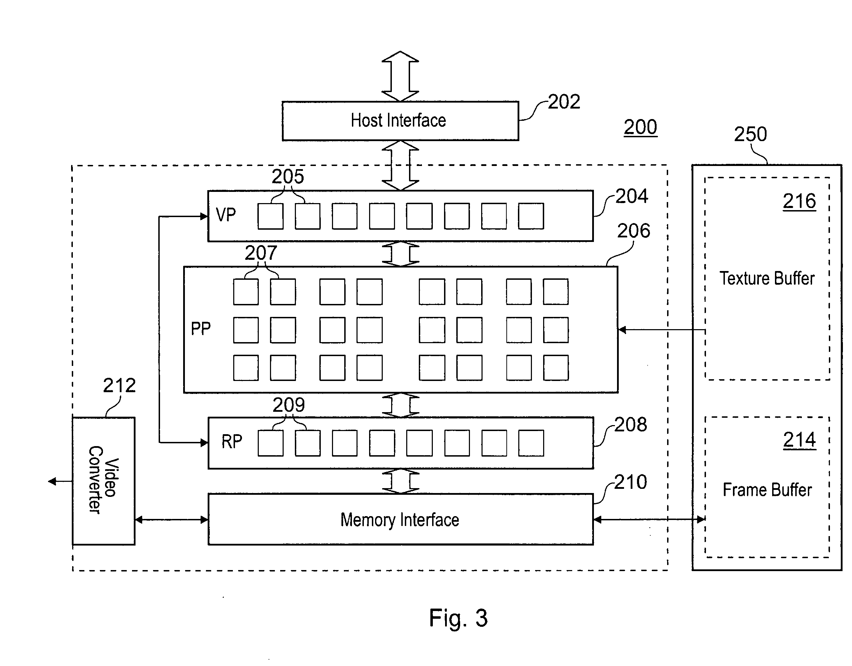

Referring now to Figure 3, the Reality Simulator graphics (RSX) unit 200 is a video accelerator based upon the NVidia® G70/71 architecture that processes and renders lists of commands produced by the Cell processor 100. The RSX unit 200 comprises a host interface 202 operable to communicate with the bus interface controller 170B of the Cell processor 100; a vertex pipeline 204 (VP) comprising eight vertex shaders 205; a pixel pipeline 206 (PP) comprising 24 pixel shaders 207; a render pipeline 208 (RP) comprising eight render output units (ROPs) 209; a memory interface 210; and a video converter 212 for generating a video output. The RSX 200 is complemented by 256 MB double data rate (DDR) video RAM (VRAM) 250, clocked at 600MHz and operable to interface with the RSX 200 at a theoretical peak bandwidth of 25.6 GB/s. In operation, the VRAM 250 maintains a frame buffer 214 and a texture buffer 216. The texture buffer 216 provides textures to the pixel shaders 207, whilst the frame buffer 214 stores results of the processing pipelines. The RSX can also access the main memory 500 via the EIB 180, for example to load textures into the VRAM 250.

The vertex pipeline 204 primarily processes deformations and transformations of vertices defining polygons within the image to be rendered.

The pixel pipeline 206 primarily processes the application of colour, textures and lighting to these polygons, including any pixel transparency, generating red, green, blue and alpha (transparency) values for each processed pixel. Texture mapping may simply apply a graphic image to a surface, or may include bump-mapping (in which the notional direction of a surface is perturbed in accordance with texture values to create highlights and shade in the lighting model) or displacement mapping (in which the applied texture additionally perturbs vertex positions to generate a deformed surface consistent with the texture).

The render pipeline 208 performs depth comparisons between pixels to determine which should be rendered in the final image. Optionally, if the intervening pixel process will not affect depth values (for example in the absence of transparency or displacement mapping) then the render pipeline and vertex pipeline 204 can communicate depth information between them, thereby enabling the removal of occluded elements prior to pixel processing, and so improving overall rendering efficiency. In addition, the render pipeline 208 also applies subsequent effects such as full-screen anti-aliasing over the resulting image.

Both the vertex shaders 205 and pixel shaders 207 are based on the shader model 3.0 standard. Up to 136 shader operations can be performed per clock cycle, with the combined pipeline therefore capable of 74.8 billion shader operations per second, outputting up to 840 million vertices and 10 billion pixels per second. The total floating point performance of the RSX 200 is 1.8 TFLOPS.

Typically, the RSX 200 operates in close collaboration with the Cell processor 100; for example, when displaying an explosion, or weather effects such as rain or snow, a large number of particles must be tracked, updated and rendered within the scene. In this case, the PPU 155 of the Cell processor may schedule one or more SPEs 110A-H to compute the trajectories of respective batches of particles. Meanwhile, the RSX 200 accesses any texture data (e.g. snowflakes) not currently held in the video RAM 250 from the main system memory 500 via the element interconnect bus 180, the memory controller 160 and a bus interface controller 170B. The or each SPE 110A-H outputs its computed particle properties (typically coordinates and normals, indicating position and attitude) directly to the video RAM 250; the DMA controller 142A-H of the or each SPE 110A-H addresses the video RAM 250 via the bus interface controller 170B. Thus in effect the assigned SPEs become part of the video processing pipeline for the duration of the task.

In general, the PPU 155 can assign tasks in this fashion to six of the eight SPEs available; one SPE is reserved for the operating system, whilst one SPE is effectively disabled. The disabling of one SPE provides a greater level of tolerance during fabrication of the Cell processor, as it allows for one SPE to fail the fabrication process. Alternatively if all eight SPEs are functional, then the eighth SPE provides scope for redundancy in the event of subsequent failure by one of the other SPEs during the life of the Cell processor.

The PPU 155 can assign tasks to SPEs in several ways. For example, SPEs may be chained together to handle each step in a complex operation, such as accessing a DVD, video and audio decoding, and error masking, with each step being assigned to a separate SPE. Alternatively or in addition, two or more SPEs may be assigned to operate on input data in parallel, as in the particle animation example above.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

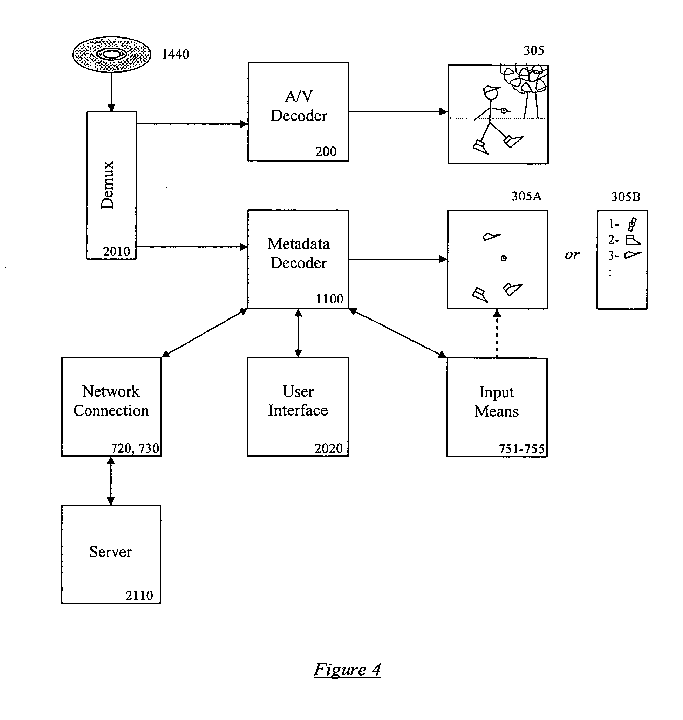

Referring now to Figure 4, in accordance with an embodiment of the present invention, the mechanisms embodied by the Playstation 3 when operating as an interactive playback device for removable data media such as Blu-Ray discs are outlined in a schematic diagram.

A demultiplexing means 2010 demultiplexes video data (such as a film or television programme) and meta-data associated with the video data supplied from a Blu-ray disk 1440 mounted in the BD-ROM drive 430. The video data is decoded by the Reality Simulator graphics (RSX) unit 200 operating as an AN decoder. The result is a display of the film or programme 305 on display 300.

A metadata decoder 1100, typically implemented by the cell processor 100, decodes the metadata. In an embodiment of the present invention, metadata is associated with each respective image frame of a plurality of successive image frames of video data.

The metadata for a respective image frame identifies one or more visible elements of the image that can be selected to obtain more information about them. These elements may variously be actors, objects or locations, and the information may variously include actor names, location details, and the availability of objects to be purchased. The information and the modes of selecting elements are described in more detail later.

It will be appreciated that not all video data on the Blu-Ray disk is necessarily augmented by such metadata. For example, where there are no selectable elements in an image frame, the metadata may be omitted (for example during a title sequence or end credits). Alternatively, only certain sections of a film or programme may be augmented in such a way, or the augmented video may be a so-called 'special feature' video separate to the main film, serving to act as a video catalogue of elements in the film that may be of further interest to the viewer.

Elements of the image frame can be selected in different ways according to the metadata supplied.

In an embodiment of the present invention, the region occupied by an element of the image frame is represented in the metadata for that frame, typically in the form of an outline trace or polygon roughly corresponding to the outline of the element (an actor's face, a particular landmark or an object in the scene, for example). This is illustrated in Figure 4 by element outlines for a hat, watch and shoes 305A corresponding to the displayed image frame 305. It will be appreciated that the trace or polygon can follow the outline of the element very closely, or be very approximate (e.g. a circle or rectangle roughly centred on the element and roughly encompassing it), or anywhere in between these extremes.

User-selection of elements so defined can be accomplished by pausing the film or programme; the user may then select an 'additional information' mode, or this mode may be activated automatically, that enables the user to select one or more of the selectable elements in the image frame. Optionally the outline traces included in the metadata may be displayed to highlight the available objects, allowing the user to select one via a pointer using one of the input controls 751 to 755. Alternatively, the user can use an input control to cycle through the available objects, with each being highlighted in turn until the user makes a selection of a currently highlighted object.

Alternatively or in addition, the user may select an element of an image during normal playback of the film or programme; movement of a directional control causes a pointer to appear during playback that can be used to click on any part of the displayed image; the Cell Processor 100 determines whether the pointer was within the outline of a selectable element for the image frame displayed when the click occurred. If so, then the additional information or other function associated with selecting the object can, for example, be superposed over some or all of the ongoing playback.

Such element outline metadata can be generated for the film or programme by manually tracing elements for each frame; however, this is laborious. Alternatively, key frames can be manually traced, and based upon these initial outlines, further intermediate image frames can be traced by known video object tracking techniques, with the proviso that where tracking confidences fall below a predetermined threshold, the metadata author can be alerted to intervene and provide a further manual input trace to re-set the tracking system. Where more approximate shapes are used, the manual or key-frame methods above can be used to position and size the shapes.

Alternatively or in addition, interpolation can be used between certain frames. For example, video data is often encoded using so-called I-frames and P-frames, respectively using intra-frame encoding and inter-frame encoding. Typically an intra-frame (I-frame) comprises full information about an image frame. By contrast, an inter-frame (P-frame) comprises enough information to reconstruct an image frame given a preceding image frame (whether itself an I-frame or a reconstruction from a P-frame). Typically these are arranged as groups of pictures (GOPs) comprising an initial I-frame and typically 8 to 12 P-frames. In this case, the outline of a selectable element could be traced for I-frames, whilst the outline for the intervening P-frames could be extrapolated from the I-frame data (optionally using motion vector data from the P-frames where possible).

For those frames where manual input is required, mechanisms to simplify the process can be envisaged, such as the use of flood-fill functions to approximate the area of an object, and then generating an outline of the filled area (optionally following a low-pass filtering process or bloom process to smooth the edges). Other techniques such as colour-based so-called 'lassoing' functions, found in image editing packages such as Adobe ® Photoshop ®, may also be used at least to provide an initial approximate trace. Likewise, the trace from the preceding frame can be inherited (with or without any further transformations based on image motion vectors and the like) and then modified by the author, since in all but the fastest moving frames this will be a close match to the correct outline.

Thus example metadata in accordance with this embodiment may take the form given in Table 1 below for two successive frames:

**Table 1 - Metadata for two frames.**

| Frame 3066 | | | |
|---|---|---|---|
| Element Code #22 | {X=260, Y=440} | Circle | Size 40 |
| Element Code #14 | {X=420, Y=130} | Square | Size 20 |

| Frame 3067 | | | |
|---|---|---|---|
| Element Code #22 | {X=265, Y=435} | Circle | Size 40 |
| Element Code #14 | {X=415, Y=135} | Square | Size 25 |
| Element Code #19 | {X=330, Y=350} | Circle | Size 20 |

In table 1, the metadata includes identifiers for the items corresponding to the selectable elements, the locations of the elements within the image and the shape and size of the elements. A trace style element would use a list of co-ordinates to define the trace.

In an embodiment of the present invention, alternatively or in addition to tracing the outline of elements of the image frame, the metadata can comprise a list identifying which, from a master set of objects / actors / locations etc. for which information is available, are represented by elements in the current image frame.

With this latter form of metadata, the selection of elements seen in the film or programme takes the form of a pop-up window or similar that can be generated by the PS3 on request by pressing a predetermined button on a controller 751-755. The window is populated with representations of those elements that were present in the image frame that was on display when the button press was detected, as identified by the metadata list. Consequently selection can occur when the film is paused, or can occur during playback, with playback then optionally continuing in the background. Selection of the objects displayed in the windows can depend on the input device used. A remote control or keyboard could use a number to select the object, whilst a game controller or mouse could use a pointing device. Once selected, the additional information or other function associated with the object can be provided as for the case where regions of the image are used.

Thus example metadata in accordance with this embodiment may take the form given in Table 2 below for two successive frames:

**Table 2 - Metadata for two frames.**

| Frame 3066 | Frame 3067 |
|---|---|
| Element Code #22 | Element Code #22 |
| Element Code #14 | Element Code #14 |
| | Element Code #19 |

In either case, the metadata may be interleaved with the video data (subject to the requirement of relevant video storage / encoding protocols), or may be stored in a separate region of the disk for association by the PS3, for example as per subtitle or dubbed audio data.

In another embodiment of the present invention, metadata is associated with other visual media to achieve a similar result. In particular, objects in video games can be identified as selectable elements. In this case, the so-called video game 'engine' provides means to recognise a user input (either a distinct control function or a control function used contextually) to identify an object (e.g. a 3D model rendered by the game engine). For example, pointing a gun at an object and pressing 's' on a keyboard (or a predetermined key on controller 751) can be interpreted as selection of an object. The game's built-in bullet-collision mechanism (or if such a game mechanic is not used, an equivalent screen pointer) can be used to identify which object is being selected and determine if the object has additional information associated with it.

For the above embodiments, the additional information or other functions associated with the selected element and the object/actor/location to which it corresponds to can also take numerous forms.

Additional information included on the Blu-Ray disk of a movie or game can vary as applicable, but can include the names of some or all cast members seen during the film or programme, optionally including publicity photos, performance histories, and for principal actors possibly commentaries on the particular scene. This addresses a popular frustration with films where the viewer cannot remember the identity of an actor - in embodiments of the present invention, the user can now click on the actor's face at any time they appear during playback and get that information.

Similarly, locations and buildings can be identified. In this case, specific structures (such as, for example, the Eiffel Tower) can be treated as a selectable element as outlined previously. By contrast, other locations that are simply background, such as a beach or forest, can also be identified by treating the selection of any area of the image frame not corresponding to any other selectable element as a request for information about the location. For a list-only embodiment, the location can be automatically appended at the bottom of the list.

For objects in the scene (such as the hat, watch and shoes in the example of Figure 4), the information provided on the Blu-Ray disk can include the name of the object, the make, model, country of origin, and a brief description or review, together with one or more photos, videos or virtual tours of the object and its features. This information can be provided by the user interface as a pop-up window overlaid on the movie or game, or as any other suitable display convention known in the art.

It will be appreciated that over time, this additional information may become out of date. Consequently, in an embodiment of the present invention, further information not available on the original Blu-Ray disk can be accessed via a network connection 720, 730.

In general, each selectable actor, object and location will have an identifiable code that can be used to access the further information for the selection. This code may reference just the selection, or may also refer to the specific version of the Blu-Ray disk (e.g. in case different promotions or licensing deals apply for different disk releases). The code can be parsed by a central server, which returns the relevant information. Alternatively or in addition, further identifying references may be available for this a purpose, such as for example the product name of an item. This name can be submitted to a preferred service provider who returns information relevant to the item, or to a search query such as that provided by Wikipedia.

For example, recent news about an actor, recent photos, and a more up-to-date filmography may be accessed by sending a request to a film website such as the internet movie database (www.imdb.com). Likewise, information about a location (such as GPS coordinates) can be used to interface with Google ® Maps or Google Earth to provide further information about the location, and/or used with other information and service providers such as travel agents.

Meanwhile, objects in the scene can receive updates on availability, price, special offers etc., from the central server, and can receive details on current methods of purchase, as described later.

It will also be appreciated that the metadata associated with the image frames or game objects themselves can also become out of date. For example, a sponsor may no longer pay to feature links to their product within the film or game, or a new sponsor, licensing deal or change in availability may allow new items to become purchasable. In addition, continuing support for the movie or game could result in, for example, more selectable elements of the background locations being added to enrich the movie experience and encourage repeat viewings, or new environments or objects being included in a game patch. Alerts to such updates could be sent to the device so that it could notify a user of their release.

Again such up-to-date metadata can be accessed from a central server via the network connection 720, 730. The metadata may include
i. additional selectable elements of the image frame (e.g. for lists);
ii. definitions of regions of the image frame where the or each additional selectable element is shown;
iii. identifiers for selectable in-game objects; and
iv. control data to disable one or more existing selectable elements.

Since the Blu-Ray disc is pre-recorded, this metadata can instead be stored on the PS3 hard disk 400. The PS3 can check for such supplementary metadata upon mounting of the Blu-Ray disk in the device, or even on playback. Alternatively, such metadata can be downloaded or streamed from the central server (i.e. as 'live' data) for each playback of the movie or session of the game. In principle, all the metadata could be accessed in this manner, although the bandwidth costs for the server providers may become onerous.

As has been suggested herein, in an embodiment of the present invention it is possible to purchase one or more items featured in the video data by selecting them in a manner outlined above.

Part of the additional data included on the Blu-Ray disk (or alternatively or in addition downloaded as described above) includes information relating to the on-line purchase of the object portrayed in a selected element. This information will typically include connection details and product identification codes required to set up an on-line order for the selected object with a remote server; typically the central server or the server of a selected partner also operable to parse such a purchase request. In general, the connection details will be common to all enquiries (i.e. to the common server) and thus may not be specifically associated with each element or object, though potentially specific connections to partner providers may be specified for one or more products and would therefore be specifically associated.

In addition to connection and product details, details of the purchaser can also be supplied from the PS3 or an on-line database to which the PS3 can securely connect. These details can be stored on the PS3 and accessed automatically or in response to a request by the server. These details can include personal details such as the user's name or age, delivery details such as a default delivery address, online account details if a login or other user-specific authentication is required for purchase, and payment details, such as credit card information or PS3 wallet account details. Optionally, transmission of such details can be conditional upon receiving an input from the user signifying consent. Such an input can be arranged to signify consent both to purchase the item and to transmit the user information deemed sufficient to secure the purchase. Where some or all of the user information is not initially available, the user interface is arranged to enable the user to enter the required information. In this latter circumstance, this information may be retained for further use as described above.

As will be appreciated from the above description, in an embodiment of the present invention a Blu-Ray disk 1440 or other removable data medium comprises, in addition to audio and video data, metadata associated with respective image frames of the video data that identifies one or more selectable elements corresponding to that image frame (either in the form of a list or specified regions of the image itself).

Likewise for video games, in addition to in-game object data (3D models, textures etc), metadata associated with one or more respective game objects identifies those objects as being selectable in a manner other than any required when playing the game (i.e. falling outside the default game mechanic of, for example, being shot at), allowing further interaction beyond the normal game play of the type disclosed herein.

In an embodiment of the present invention the metadata provides information readable by the player or entertainment device to identify to a remote server one or more purchasable items corresponding to one or more respective selectable elements/objects. Thus the disk comprises data to facilitate a user of the disk to purchase items on-line when they appear during playback of the video or game.

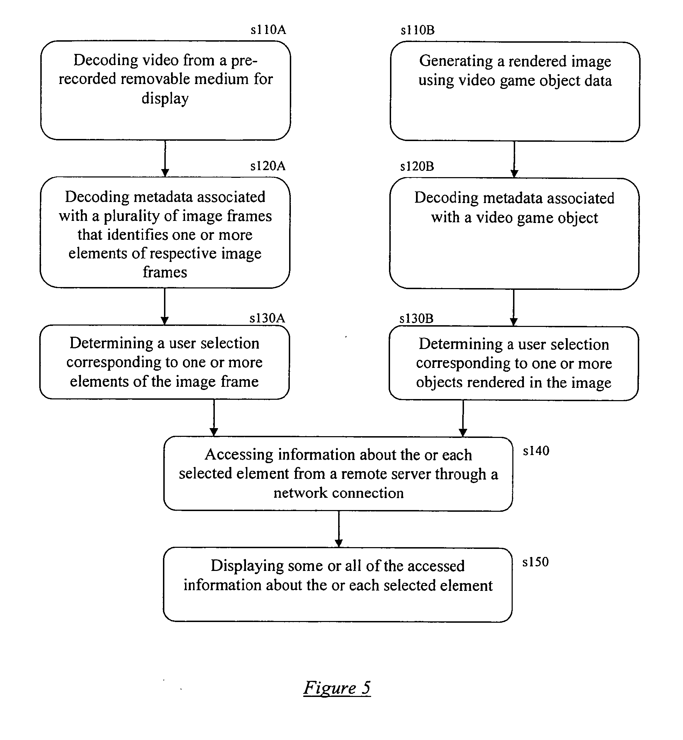

Referring now to Figure 5, a method of video interaction comprises:
in a first step s110A, decoding video from a pre-recorded removable medium for display;
in a second step s120A, decoding metadata associated with a plurality of image frames of said video data, in which the metadata for a respective image frame identifies one or more elements of that image frame;
in a third step s130A, determining a user selection corresponding to one or more elements of the image frame;
in a fourth step s140, accessing information about the or each selected element from a remote server through a network connection; and
in a fifth step s150, displaying some or all of the accessed information about the or each selected element.

Alternatively, a method of video interaction for a video game may comprise:
in a first step s110B, generating a rendered image using video game object data;
in a second step s120B, decoding metadata associated with a video game object;
in a third step s130B, determining a user selection corresponding to one or more objects rendered in the image,
with the remaining steps corresponding to those of the method of video interaction disclosed above.

It will be apparent to a person skilled in the art that variations in the above methods corresponding to operation of the various embodiments of the apparatus described above are considered within the scope of the present invention, including as applicable but not limited to:
i. receiving purchase information (e.g. pricing, availability) about the object corresponding to the selected element;
ii. transmitting information sufficient to secure purchase of such an object to a remote server;
iii. determining user selection via defined regions of the video image frame that correspond to the position of a selectable element;
iv. determining user selection via a list of selectable elements associated with a video image frame; and
v. downloading supplementary metadata, such as additional selectable elements, or commands to disable one or more current selectable elements.

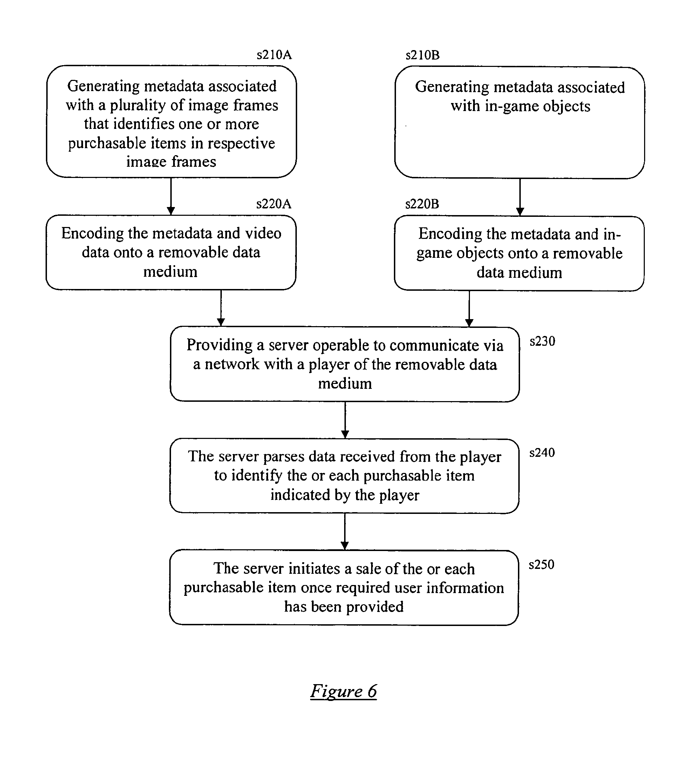

It will be appreciated that the above method relates to the user-oriented stages of the more general video interaction process described herein. Referring now to Figure 6, a complementary a method for the producer of such an interactive video or video game will include authoring the Blu-ray discs and making available the on-line services that are accessed by the user. Thus a method of providing interactive video comprises:
in a first step s210A, generating metadata for respective image frames of a plurality of successive image frames of video data, in which the metadata identifies one or more elements of the respective image frame that correspond to purchasable items;
in a second step 220A, encoding the metadata and video data onto a removable data medium;
in a third step 230, providing a server operable to communicate via a network with a player of the removable data medium, and in which
in a fourth step 240 , the server parses data received from the player to identify the or each purchasable item indicated by the player; and
in a fifth step 250, the server initiates a sale of the or each purchasable item once required user information has been provided.

Alternatively a method of providing interactive video for video games comprises:
in a first step 210B, generating metadata for in-game objects rather than image frames, the metadata identifying one or more objects that correspond to purchasable items;
in a second step 22B, encoding the metadata and in-game objects onto a removable data medium,
with the remaining steps corresponding to those of the method of providing interactive video disclosed above.

It will be apparent to a person skilled in the art that variations in the above method corresponding to operation of the various embodiments of the apparatus described above are considered within the scope of the present invention, including as applicable but not limited to:
i. generating metadata descriptive of regions of the video image frame in which such purchasable objects are portrayed;
ii. generating metadata listing purchasable objects portrayed in a respective video image frame;
iii. nominating partners to supply the server facilities;
iv. supplying up-to-date purchase information (e.g. price, availability) to a user from the server;
v. parsing data at the server including an identifier of the removable data medium, e.g. a geographical region code or other release-specific code; and
vi. the server requesting further information necessary to complete the purchase.

It will be appreciated that various embodiments and features of embodiments of the present invention may be implemented on one or more devices - for example a PS3 client device and a central server.

Thus the required adaptation to existing parts of a conventional equivalent device may be implemented in the form of a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

## Claims

1. A media player for playing pre-recorded removable media, comprising:
a media decoder to decode video data for display;
a metadata decoder to decode metadata associated with a respective image frame of said video data, in which the metadata identifies one or more visible elements of that image frame;
input means operable to detect a user selection corresponding to one or more elements of the image frame;
a network connection operable to connect to a remote server and access information about the or each element so selected; and
a user interface generation means operable to generate for display some or all of the information about the or each element so selected.

2. A media player for playing pre-recorded media according to claim 1, in which the information about an element so selected comprises information enabling the on-line purchase of an item corresponding to the selected element.

3. A media player for playing pre-recorded media according to claim 2, in which the media player provides a user interface enabling the input of user information sufficient to secure purchase of the one or more items corresponding to the or each respective element so selected.

4. A media player for playing pre-recorded media according to claim 3, in which the user information comprises one or more selected from the list consisting of:
i. consent to the purchase;
ii. personal details;
iii. delivery details;
iv. online account details; and
v. payment details.

5. A media player for playing pre-recorded media according to any one of claims 2 to 4, in which the media player accesses stored information comprising one or more selected from the list consisting of:
i. personal details;
ii. delivery details;
iii. online account details; and
iv. payment details.

6. A media player for playing pre-recorded media according to any one of the preceding claims, in which metadata associated with an image frame comprises definitions of the regions in the image frame where the or each selectable element is shown.

7. A media player for playing pre-recorded media according to claim 6, in which the input means comprises analysis means operable to analyse the position of a cursor controlled by the user, to determine whether it is coincident with a defined region of a selectable element in the current image frame, and if so to identify the selection made to the media player.

8. A media player for playing pre-recorded media according to claim 6 or claim 7, in which the input means comprises highlighting means operable to highlight the or each selectable element in the current image frame in turn in response to a user input, and where an element so highlighted is selected by the user via the user interface, identifying the selection made to the media player.

9. A media player for playing pre-recorded media according to any one of the preceding claims, in which metadata associated with an image frame comprises a list of selectable elements of the image frame.

10. A media player for playing pre-recorded media according to claim 9, in which the input means comprises a list generation means operable to superpose on the display a list of elements corresponding to the selectable elements in a frame, the list being generated in response to a user input and the relevant frame for generating the list being that frame which was current at the time at which the user input was received; and to identify any selection made from this list by the user via the user interface to the media player.

11. A media player for playing pre-recorded media according to any one of the preceding claims, in which the media player is operable to download from a remote server supplementary metadata for association with an image frame.

12. A media player for playing pre-recorded media according to claim 11, in which the supplementary metadata comprises one or more selected from the list consisting of:
i. additional selectable elements of the image frame;
ii. definitions of regions of the image frame where the or each additional selectable element is shown; and
iii. control data to disable one or more existing selectable elements.

13. A media player for playing pre-recorded media according to any one of the preceding claims, in which the network connection is operable to transmit to a remote server data identifying the pre-recorded removable media from which the selection has been made, and the element selected from that media.

14. A media player for playing pre-recorded media according to any one of the preceding claims, in which metadata is provided for a plurality of successive image frames of the video data.

15. A method of video interaction comprising the steps of;
decoding video from a pre-recorded removable medium for display;
decoding metadata associated with an image frame of said video data, in which the metadata identifies one or more visible elements of that image frame;
detecting a user selection corresponding to one or more elements of the image frame;
accessing information about the or each element so selected from a remote server through a network connection; and
displaying some or all of the accessed information about the or each element so selected.

16. A method of video interaction according to claim 15, in which some or all of the information about the or each element so selected comprises information enabling the on-line purchase of one or more items corresponding to the or each respective element so selected.

17. A method of video interaction according to claim 16, the method further comprising the step of:
providing a user interface that enables the input of user information sufficient to secure purchase of the one or more items corresponding to the or each respective element so selected responsive to the information regarding on-line purchase received from the remote server.

18. A method of video interaction according to any one of claims 15 to 17, in which the metadata associated with an image frame comprises definitions of the regions in the image frame where the or each selectable element is shown.

19. A method of video interaction according to claim 18 comprising the step of analysing the position of a cursor controlled by the user, to determine whether it is coincident with the defined region of a selectable element in the current image frame.

20. A method of video interaction according to any one of claims 15 to 19, in which metadata associated with an image frame comprises a list of selectable elements of the image frame.

21. A method of video interaction according to claim 20, comprising the step of
superposing on the display a list of elements corresponding to the selectable elements in a frame, the list being generated in response to a user input and the relevant frame for generating the list being that frame which was current at the time at which the user input was received.

22. A method of video interaction according to any one of claims 15 to 21, comprising the step of downloading from a remote server supplementary metadata to be associated with an image frame.

23. A method of video interaction according to claim 22, in which the supplementary metadata comprises one or more selected from the list consisting of:
i. additional selectable elements of the image frame;
ii. definitions of regions of the image frame where the or each additional selectable element is shown; and
iii. control data to disable one or more existing selectable elements.

24. A method of video interaction according to any one of claims 15 to 23 in which the step of accessing information about the or each selected element comprises transmitting to a remote server data identifying the pre-recorded removable media from which the selection has been made, and the element selected from that media.

25. A method of video interaction according to any one of claims 15 to 24 in which metadata is provided to a plurality of successive image frames of the video data.

26. An entertainment device for playing video games, comprising:
a video processor to render in-game object models for display;
a metadata decoder to decode metadata associated with a respective in-game object model;
input means operable to detect a user selection corresponding to one or more in-game object models;
a network connection operable to connect to a remote server and access information about the or each object so selected; and
a user interface generation means operable to generate for display some or all of the information about the or each object so selected.

27. An entertainment device for playing video games to claim 26, in which the information about an element so selected comprises information enabling the on-line purchase of an item corresponding to the selected element.

28. A method of providing interactive video comprising the steps of:
generating metadata for an image frame of video data, in which the metadata identifies of one or more selectable visible elements of the image frame that correspond to purchasable items;
encoding the metadata and video data onto a removable data medium;
providing a server operable to communicate via a network with a player of the removable data medium, and in which the server
parses data received from the player to identify the or each purchasable item indicated by the player, corresponding to one or more selectable visible elements of an image frame; and
initiates a sale of the or each purchasable item once required user information has been obtained.

29. A method of providing interactive video according to claim 28 in which the server generates and transmits data indicating user information required to complete a purchase of the or each purchasable item.

30. A method of providing an interactive video game comprising the steps of:
generating metadata for a selectable in-game object model;
encoding the metadata and video data onto a removable data medium;
providing a server operable to communicate via a network with a player of the removable data medium, and in which the server
parses data received from the player to identify the or each purchasable item indicated by the player and corresponding to a selectable in-game object model; and
initiates a sale of the or each purchasable item once required user information has been obtained.

31. A method of providing interactive video according to claim 30 in which the server generates and transmits data indicating user information required to complete a purchase of the or each purchasable item.

32. A removable data storage medium, comprising:
video data; and
metadata associated with an image frame of the video data, in which
the image frame metadata identifies one or more selectable visible elements of that image frame; and
the metadata provides information to identify to a remote server one or more purchasable items corresponding to the or each respective element.

33. A removable data storage medium, comprising:
video game object data; and
metadata associated with the game object data, in which
the game object metadata identifies a game object as being selectable in a manner other than any required when playing the game, for use in an interactive mode outside the game; and
the game object metadata provides information to identify to a remote server one or more purchasable items corresponding to the game object.

34. A data carrier comprising computer readable instructions that, when executed by a computer, cause the computer to operate as a media player according to any one of claims 1 to 14.

35. A data carrier comprising computer readable instructions that, when executed by a computer, cause the computer to carry out the method of any one of claims 15 to 24.

36. A data carrier comprising computer readable instructions that, when executed by a computer, cause the computer to operate as an entertainment device according to any one of claims 26 or 27.

37. A data carrier comprising computer readable instructions that, when executed by a computer, cause the computer to carry out the method of claim 28 or 29.

38. A data carrier comprising computer readable instructions that, when executed by a computer, cause the computer to carry out the method of claim 30 or 31.

39. A data signal comprising computer readable instructions that, when executed by a computer, cause the computer to operate as a media player according to any one of claims 1 to 14.

40. A data signal comprising computer readable instructions that, when executed by a computer, cause the computer to carry out the method of any one of claims 15 to 24.

41. A data signal comprising computer readable instructions that, when executed by a computer, cause the computer to carry out the method of claim 28.
